# EUROPÄISCHE PATENTSCHRIFT

(11) **EP 2 487 009 B1**
(45) Veröffentlichungstag und Bekanntmachung des Hinweises auf die Patenterteilung: **05.11.2014**
(21) Anmeldenummer: 12154452.2
(22) Anmeldetag: 08.02.2012
(51) Int. Cl.: B25B 1/24, B23Q 1/03

(54) **Spannvorrichtung für eine Werkzeugmaschine**
Clamping device for a machine tool
Dispositif de serrage pour une machine-outil

(30) Priorität: 09.02.2011 DE 102011010726
(43) Veröffentlichungstag der Anmeldung: 15.08.2012
(73) Patentinhaber: Kacema GmbH, 83071 Stephanskirchen (DE)
(72) Erfinder: Sporer, Klaus, 83071 Stephanskirchen (DE)
(74) Vertreter: Dilg, Haeusler, Schindelmann Patentanwaltsgesellschaft mbH

(56) Entgegenhaltungen:
- EP-A1- 0 761 382
- US-A1- 2002 089 109
- US-A1- 2009 273 132
- US-B1- 6 799 757

## Beschreibung

### Technisches Gebiet

Die vorliegende Erfindung betrifft eine Spannvorrichtung für eine Werkzeugmaschine zum zeitsparenden, lagegenauen und bei Bedarf formschlüssigen Spannen von Werkstücken auf Werkzeugmaschinen.

### Hintergrund der Erfindung

Ursprünglich wurden zum lagegenauen Spannen von Werkstücken auf Werkzeugmaschinen, zusätzlich gefertigte Bauteile verwendet, die mittels ihrer Kontur bzw. ihrer Baugröße einen Bezug zu der betreffenden Spannvorrichtung herstellten. Dadurch wurde ein vorgegebener Winkel bzw. ein definierter Abstand zu der, dem Werkzeug zugewandten Seite der Spannvorrichtung erreicht.

Nachteil dieser Methode, ein Werkstück winkel- und positionsgenau zu spannen, liegt zum Einen in der Gefahr, dass sich Späne und Ablagerungen des Kühlmittels zwischen Spannsystem, zusätzlichem Bauteil und Werkstück ansammeln können, und damit beim Spannen des nächsten Werkstückes, die genaue Lage und Position nicht mehr erreicht werden können. Dies kann lediglich durch sehr sorgfältiges und zeitaufwendiges Reinigen der betreffenden Elemente verhindert werden. Zum Anderen muss jeweils für eine bestimmte Position, bzw. für eine bestimmte Lage des Werkstückes, ein speziell dafür vorgesehener Abstandshalter oder eine eigens dafür angefertigte Winkellehre verwendet werden.

Ein dritter Nachteil dieser Methode, ein Werkstück zu positionieren, liegt in der Anzahl der in einem Fertigungsbetrieb dafür benötigten Einzelteile. Diese müssen jeweils vor dem betreffenden Fertigungsschritt bereitgestellt werden, was zu einem nicht zu vernachlässigbaren Erhöhen der Nebenzeiten führt.

Die genannten Nachteile führten zu Neuentwicklungen bei denen in der Spanneinrichtung des Spannsystems, Stifte bzw. zylindrische Bauteile verwendet werden, auf denen das Werkstück von der Bedienperson aufgesetzt wird. Dazu sind Bohrungen in der Spanneinrichtung auf der dem Werkstückstück zugewandten Seite zur Aufnahme der Stifte vorgesehen, durch deren zylindrische Form das Säubern der Spanneinrichtung wesentlich vereinfacht wird.

So sieht die US-A-3463478 einen Schraubstock als Spannsystem vor, bei dem eine der Spannbacken Bohrungen aufweist, in die Zylinderstifte, je nach gewünschter Position und Winkellage des Werkstückes gesteckt werden. Danach legt die Bedienperson das Werkstück auf die Stifte auf, und schließt die Backen des Schraubstockes. Somit ist eine wiederholgenaue und leicht zu reinigende Möglichkeit geschaffen, ein Werkstück für die Bearbeitung auf einer Werkzeugmaschine zu positionieren.

Nachdem die Stifte von Hand in die Bohrungen gesteckt werden, können sie auch aufgrund der Vibrationen beim Bearbeiten des Werkstückes selbständig herausfallen, und müssen dann wieder aufgesammelt werden.

Die Anordnung der Bohrungen ist dabei so gewählt, dass verschiedenartigste Positioniermöglichkeiten für das Werkstück gegeben sind, wie zum Beispiel in Fig. 1 der WO 92/14582 A zu sehen ist.

Eine Möglichkeit, über einen zylinderförmigen oder einen konisch zulaufenden Stift eine Aufnahmeplatte, auf dem eina Werkstück aufgespannt ist, zu positionieren, zeigt die US 4,174,828 A in Fig.4 und Fig.5. Hier liegt die zu positionierende Aufnahmeplatte auf einer Anlagefläche der Positioniervorrichtung auf, die eine Mehrzahl von Bohrungen aufweist. Diese Bohrungen münden stufenartig auf der, der Anlagefläche abgewandten Seite, in eine weitere koaxiale Bohrung mit größerem Durchmesser. Der Zentrierstift weist auf der, der Anlagefläche abgewandten Seite, einen zylindrischen und zum Positionierstift koaxial verlaufenden Fortsatz mit größerem Durchmesser auf. Mittels eines Druckmediums wird der Positionierstift in Arbeitsposition, bzw. zurück in seine Ruhestellung gebracht.

Der Nachteil dieses Positioniersystems liegt in der Notwendigkeit, ein Druckmedium bereitstellen zu müssen, und über Steuerungselemente die Bewegungen des Positionierstiftes zu koordinieren.

Eine Weiterentwicklung für das Positionieren von Werkstücken zeigt die EP 0 761 382. Hier wird im Unterschied zu der US 4,174,828 A der Positionierstift nur einseitig mit Druck beaufschlagt, um in die Arbeitsposition zu kommen. Die Bedienperson schiebt dann diejenigen Positionierstifte, die für die Positionierung des Werkstückes nicht benötigt werden, wieder zurück in ihre Ausgangsposition. Der Druck wird dabei stoßweise durch eine handelsübliche Druckluftpistole aufgebracht.

Um möglichst viele verschiedene Werkstückgeometrien abdecken zu können, werden Auflageplatten beschrieben, die Zentrierbohrungen aufweisen, und die zu ihrer Lagefixierung auf die Positionierstifte geschoben werden. Auch hier liegt einer der Nachteile in der Notwendigkeit, ein Druckmedium bereitstellen zu müssen, um die Positionierstifte in Arbeitsstellung bringen zu können. Ein weiterer Nachteil liegt darin, dass aufgrund der freien Beweglichkeit der Positionierstifte bei Nichtbeaufschlagung durch das Druckmedium, diese leicht ungewollt beim Aufschieben der Auflageplatte, wieder in ihre Ausgangsposition zurück geschoben werden.

Neben der Lagepositionierung von Werkstücken auf Werkzeugmaschinen geht auch das Umspannen der Werkstücke stark in die unproduktiven Zeiten im Fertigungsprozess mit ein. Deshalb wird häufig versucht, das Werkstück möglichst weit aus dem Schraubstock ragen zu lassen, um damit möglichst selten umspannen zu müssen. Da jedoch das Werkstück im allgemeinen unter Kraft- bzw. Reibschluss gehalten wird, und die Bearbeitungskräfte oft sehr hoch werden, sind hier enge Grenzen gesetzt.

### Darstellung der Erfindung

Der vorliegenden Erfindung liegt somit die Aufgabe zu Grunde, eine anwendungsfreundliche und wiederholgenaue Positioniervorrichtung zu schaffen, zu deren Betrieb kein Zusatzausrüstung benötigt wird, und das wahlweise auch eine formschlüssige Verbindung zum Spannen des Werkstückes zwischen Positioniervorrichtung und Werkstück ermöglicht.

Gemäß der vorliegenden Erfindung wird diese Aufgabe dadurch gelöst, dass die Spannvorrichtung auf der, dem zu spannenden Werkstück zugewandten Seite, eine Mehrzahl von Anschlagstiften zugeordnet ist, die in entsprechenden Öffnungen des Grundkörpers geführt sind, und je nach Bedarf, aus der Spannfläche herausragen können, oder nicht.

Auf der dem Werkstück abgewandten Seite des Anschlagstiftes ist eine Druckplatte angeordnet, die entlang einer schräg zur Spannfläche verlaufenden Bahn verschiebbar ist.

Die Druckplatte, welche zum Verschieben der Anschlagstifte dient, ist entlang einer Führungsnut bzw. einer schräg verlaufenden Bahn verschieblich. Stirnseitig zu der Druckplatte ist dieser ein Druckknopf zugeordnet, über den die Druckplatte entlang der zur Spannfläche schräg verlaufenden Bahn verschoben werden kann.

Am anderen stirnseitigen Ende der Druckplatte befindet sich eine zylinderförmige Vertiefung, in der mindestens eine Druckfeder und mindestens ein Zylinderstift geführt wird.

Drückt die Bedienperson auf den Druckknopf, so wird die Druckplatte entgegen der Federkraft der Druckfeder, entlang der schräg verlaufenden Bahn verschoben. Dabei ist der Winkel zwischen der Spannfläche und der Führungsbahn der Druckplatte so gewählt, daß diese, währenddessen die Führungsstifte bzw. die Anschlagstifte aus ihrer neutralen Position, in die Anschlagsposition bewegt.

Anschließend wird die Druckplatte aufgrund der Federkraft der Druckfeder wieder, entlang der schräg verlaufenden Führungsbahn, in ihre Ausgangsposition zurück bewegt.

Das Anschlagelement bzw. der Anschlagstift verbleibt in seiner, aus der Spannfläche herausragenden Position, jedoch ohne Zwang in dieser Stellung zu bleiben. Je nach Kontur des Werkstückes kann nun die Bedienperson diejenigen Anschlagstifte in die Spannfläche zurückdrücken, die für die Positionierung des Werkstückes nicht benötigt werden.

Die Bedienperson hat nun die Möglichkeit, mit der einen Hand den Druckknopf zu drücken, und mit der anderen Hand zusätzliche Positionierhilfsmittel auf die Anschlagstifte aufzustecken. Anschließend läßt die Bedienperson den Druckknopf wieder los, und die Druckplatte nimmt ihre ursprüngliche Position wieder ein. Damit können die Anschlagstifte während des Aufsteckens der Positionierhilfsmittel nicht ungewollt hinter die Spannfläche verschoben werden. Ein feinfühliges und damit zeitaufwendiges Handhaben mit der Positioniervorrichtung wird damit verhindert.

Zusammenfassend wird eine Spannvorrichtung für eine Werkzeugmaschine beschrieben, die eine bewegliche Druckplatte aufweist, die schräg zur Spannfläche geführt wird. Aus der Spannfläche der Positioniervorrichtung kann, je nach Schaltstellung, mindestens ein Anschlagelement bzw. -stift herausragen, an welches das Werkstück anschlägt, bevor es von dem Spannsystem über die Spannfläche fixiert wird. Durch die Bewegung der Druckplatte wird das Anschlagelement bzw. -stift aus seiner Ausgangsposition in die aktive Positionierstellung gebracht.

Es wird darauf hingewiesen, dass Ausführungsformen der Erfindung mit Bezug auf unterschiedliche Erfindungsgegenstände beschrieben wurden.

Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden wird die Erfindung anhand des bevorzugten Ausführungsbeispiels näher erläutert. Es zeigen
**Fig.1** eine dreidimensionale schräge Frontansicht der bevorzugten Ausführungsform der erfindungsgemäßen Spannvorrichtung in Grundstellung.
**Fig.2** eine dreidimensionale schräge Rückansicht der bevorzugten Ausführungsform der erfindungsgemäßen Spannvorrichtung in Grundstellung.
**Fig.3** eine zweidimensionale Rückansicht der bevorzugten Ausführungsform in Grundstellung.
**Fig.4** einen Längsschnitt X-X in Höhe des Druckknopfes und des Zylinderstiftes.
**Fig.5** einen weiteren Längsschnitt C-C, der nahe der unteren Körperkante der Druckplatte verläuft.
**Fig.6** eine Schrägansicht der erfindungsgemäßen Spannvorrichtung, wobei hier wegen der besseren Veranschaulichung verschiedene Komponenten nicht dargestellt wurden.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

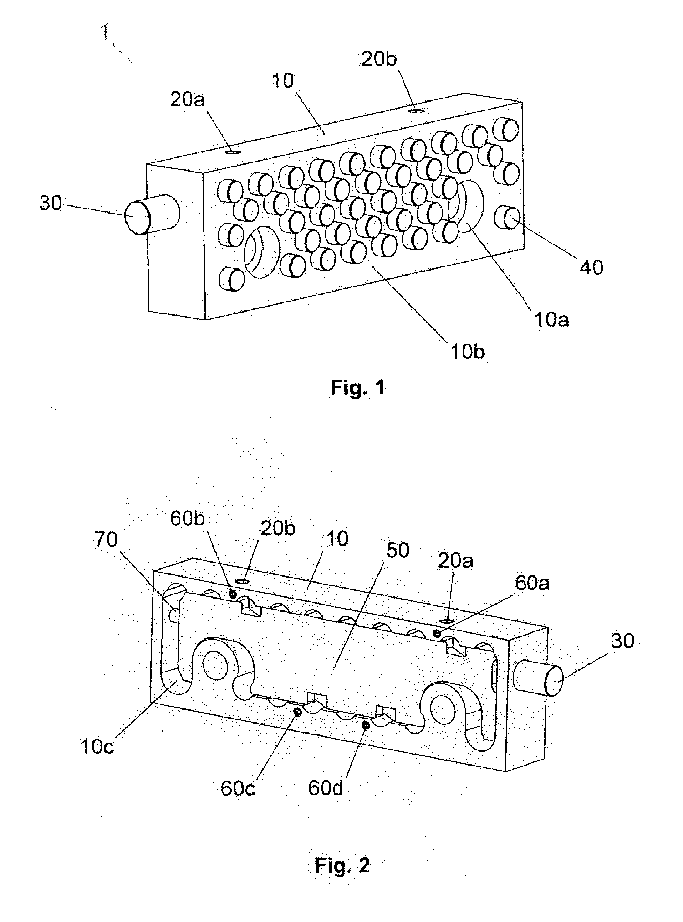

**Fig.1** zeigt eine räumliche Frontansicht der erfindungsgemäßen Spannvorrichtung (1) für eine Werkzeugmaschine in Grundstellung. Die Spannfläche befindet sich auf der, dem Betrachter zugewandten Seite. Die Anschlagstifte (40) ragen aus der Spannfläche heraus. Der Grundkörper (10) weist mindestens eine Befestigungsbohrung (10a) auf, über die die gesamte Spannvorrichtung befestigt werden kann.

Auf der Oberseite des Grundkörpers (10) sind die Führungsstifte (20a) und (20b) mit dem Grundköper fest verbunden. Zu deren Sicherung werden die Fixierelemente (60a) bis (60d) eingesetzt, die ihrerseits mit dem Grundkörper (10) fest verbunden sind.

In **Fig. 2** ist eine räumliche Rückansicht der Spannvorrichtung dargestellt. Die Druckplatte (50) wird von den Führungsstiften (20a) bis (20d) geführt, und von dem Druckknopf (30), bei Betätigung durch die Bedienperson, entlang der Führungsbahn geschoben. Am anderen, stirnseitigen Ende der Druckplatte(50), ist der Zylinderstift (70) zu sehen, der die Druckplatte (50), auf der Führungsbahn, wieder zurück in ihre Ausgangsposition bringt. Beaufschlagt wird der Zylinderstift (70) von einer Druckfeder, die in dieser Darstellung nicht zu sehen ist.

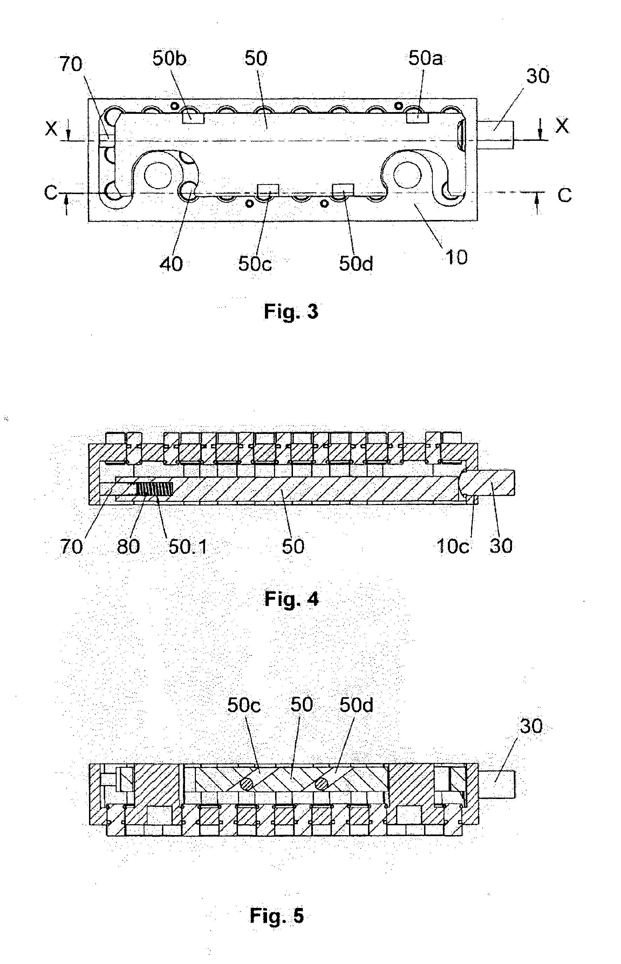

**Fig. 3** zeigt die der Spannfläche abgewandten Seite der Spannvorrichtung als zweidimensionale Ansicht. Die Druckplatte (50) befindet sich in ihrer Grundstellung, in der die Anschlagstifte (40) frei beweglich sind.

Der in **Fig. 4** dargestellte Längsschnitt veranschaulicht den Kraftfluß, ausgehend vom Druckknopf (30), der von der Bedienperson gedrückt wird, über die Druckplatte (50) und über die Druckfeder (80), die den Zylinderstift (70) gegen die Innenseite des Grundkörpers (10) drückt. Die Druckfeder (80) sitzt in einer Bohrung der Druckplatte (50), auf deren stirnseitiges Ende, sie sich abstützt.

Dabei sind Druckfeder (80) und Zylinderstift (70) so ausgelegt, daß sie bei der größten Auslenkung der Druckplatte (50) komplett in ihr verschwinden können. Dann liegt die in dieser Ansicht linke Körperkante der Druckplatte (50) an der Innenseite des Grundkörpers (10) an. Die Anschlagstifte (40) liegen nicht an der, der Spannfläche abgewandten Seite, der Druckplatte (50) an. Sie sind dadurch frei beweglich und können wahlweise von der Bedienperson in eine Position gedrückt werden, in der sie nicht mehr aus der Spannfläche herausragen.

**Fig.5** zeigt einen Längsschnitt durch die Spannvorrichtung. Hier sind die Führungsnuten (50c) und (50d) zu sehen, entlang derer die Druckplatte (50) über die, mit dem Grundkörper (10) fest verbundenen, Führungsstifte (20c) und (20d), geführt ist.

Die Druckplatte (50) ist hier in ihrer Grundstellung. Die Anschlagstifte (40) ragen aus der Spannfläche heraus und können von der Bedienperson nach innen geschoben werden.

Beim Drücken des Druckknopfes, wird über ihn die Druckplatte (50) entlang der schräg verlaufenden Nuten (50a) bis (50d) bewegt. Sie beschreibt dabei eine schräg zur Spannfläche verlaufende Bahn, wobei die Oberfläche der Druckplatte (40) stets parallel zur Spannfläche bleibt.

Diese Bewegung endet, sobald die Druckplatte (50) auf der Innenseite des Grundkörpers (10) ansteht. In dieser Position ist die Druckfeder (80) maximal eingedrückt. Dadurch wird die Druckplatte (50) wieder in ihre Ausgangsposition zurück bewegt, sobald die Bedienperson keinen Druck mehr auf den Druckknopf ausübt.

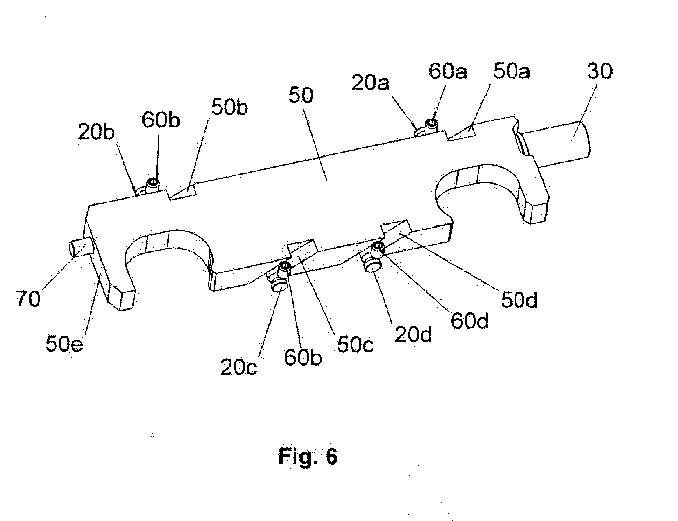

In **Fig. 6** sind zur Veranschaulichung nur die für den Bewegungsablauf relevanten Komponenten dargestellt. Die Führungsstifte (20a) bis (20d) sind in den jeweils dafür vorgesehenen Führungsnuten (50a) bis (50d) bzw. (60a) bis (60d) zu sehen. Die Fixierelemente (60a) bis (60d) fixieren wegen der besseren Montage und Demontage die Führungsstifte (20a) bis (20d) in dem Grundkörper (10).

## Patentansprüche

1. Spannvorrichtung für eine Werkzeugmaschine, insbesondere einen Schraubstock, umfassend einen Grundkörper (10), der eine Spannfläche (10b) aufweist, die durch eine Mehrzahl von Bohrungen durchsetzt ist, und auf der, der Spannfläche abgewandten Seite, eine taschenförmige Vertiefung (10c) aufweist, und eine Mehrzahl von Anschlagstiften (40), die in den Bohrungen so angeordnet sind, daß sie gegenüber der Spannfläche (10b) zwischen Positionen verschiebbar sind, in denen die Anschlagstifte (40) gegenüber der Spannfläche (10b) hervortreten oder nicht hervortreten, **dadurch gekennzeichnet, dass**
in der taschenförmigen Vertiefung (10c) auf der, der Spannfläche (10b) abgewandten Seite des Grundkörpers (10), mindestens ein Führungsstift (20a) parallel zur Spannfläche (10b), angeordnet ist, der fest mit dem Grundkörper (10) verbunden ist, und eine Druckplatte (50), die auf der, der Spannfläche (10b) abgewandten Seite des Grundkörpers (10), angeordnet ist, und mindestens eine, schräg zur Spannfläche (10b) verlaufende Führungsnut (50a) aufweist, die den Führungsstift (20a) umgreift, und so die Druckplatte (50) entlang der Führungsnut (50a) verschieblich ist.

2. Spannvorrichtung für eine Werkzeugmaschine nach Anspruch 1, **dadurch gekennzeichnet, dass**
die Druckplatte (50) auf einer ihrer stirnseitigen Endflächen (50e), eine zylinderförmige Vertiefung (50.1) aufweist, in der mindestens eine Druckfeder (80) und mindestens ein Zylinderstift (70), angeordnet sind.

3. Spannvorrichtung für eine Werkzeugmaschine nach Anspruch 1, **dadurch gekennzeichnet, dass**
der Grundkörper (10) mindestens eine stirnseitige, zylinderförmige Öffnung (10c) der taschenförmigen Vertiefung (10c), parallel zur Spannfläche (10b) aufweist.

4. Spannvorrichtung für eine Werkzeugmaschine nach Anspruch 3, **dadurch gekennzeichnet, dass**
in der zylinderförmigen Öffnung (10c) ein Druckknopf (30) angeordnet ist, der stirnseitig die Druckplatte (50) berührt und auf der gegenüberliegenden Stirnseite aus dem Grundkörper (10) ragt.

5. Spannvorrichtung für eine Werkzeugmaschine nach den Ansprüchen 1 und 4, **dadurch gekennzeichnet, dass**
jedem Führungsstift (20a) bis (20d) mindestens ein Sicherungselement bzw. ein Fixierelement (60a) bis (60d) zugeordnet ist.

## Claims

1. Clamping device for a machine tool, in particular a bench vice, comprising
a base body (10) which comprises a clamping surface (10b) which is interspersed with a plurality of bore holes, and
which comprises on the side which is averted to the clamping surface (10b) a pocket-shaped recess (10c), and
a plurality of stop pins (40) which are arranged in the bore holes, so that they are shiftable relative to the clamping surface (10b) between positions, in which the stop pins (40) protrude or not protrude relative to the clamping surface (10b), **characterized in that**
in the pocket-shaped recess (10c) on the side of the base body (10) which is averted to the clamping surface (10b) is arranged in parallel to the clamping surface (10b) at least one guide pin (20a), which is tightly attached to the base body (10), and
a pressure plate (50), which is arranged on the side of the base body (10) which is averted to the clamping surface (10b), and
comprises at least one diagonally to the clamping surface (10b) running guide notch (50a), which encompasses the guide pin (20a), and so the pressure plate (50) is shiftable along the guide notch (50a).

2. Clamping device for a machine tool according to claim 1,
**characterized in that**
the pressure plate (50) comprises on one of its end faces (50e) a cylindrical recess (50.1), in which at least one pressure spring (80) and at least one cylinder pin (70) are arranged.

3. Clamping device for a machine tool according to claim 1,
**characterized in that**
the base body (10) comprises at least one frontal, cylindrical opening (10c) of the pocket-shaped recess (10c) parallel to the clamping surface (10b).

4. Clamping device for a machine tool according to claim 3,
**characterized in that**
in the cylindrical opening (10c) a push-button (30) is arranged, which touches frontally the pressure plate (50) and protrudes out of the base body (10) at the averted frontal side.

5. Clamping device for a machine tool according to claims 1 and 4,
**characterized in that**
to each guide pin (20a) to (20d) at least one retaining element and one fixing element (60a) to (60d) is assigned, respectively.

## Revendications

1. Dispositif de serrage destiné à une machine-outil, en particulier à un étau, comprenant un corps de base (10), qui présente une surface de serrage (10b) traversée par une pluralité d'alésages et qui présente, sur le côté opposé à la surface de serrage, un évidement (10c) en forme de poche, et une pluralité de tiges de butée (40), qui sont disposées dans les alésages de telle manière qu'elles peuvent être déplacées par coulissement par rapport à la surface de serrage (10b) entre certaines positions, dans lesquelles les tiges de butée (40) sortent ou pas par rapport à la surface de serrage (10b), **caractérisé en ce**
**qu'**au moins une tige de guidage (20a) est disposée de manière parallèle par rapport à la surface de serrage (10b), dans l'évidement (10c) en forme de poche sur le côté, opposé à la surface de serrage (10b), du corps de base (10), ladite tige de guidage étant reliée de manière solidaire au corps de base (10), présentant une plaque de pression (50) disposée sur le côté, opposé à la surface de serrage (10b), du corps de base (10), et au moins une rainure de guidage (50a) s'étendant de manière inclinée par rapport à la surface de serrage (10b), ladite rainure de guidage entourant la tige de guidage (20a) et la plaque de pression (50) pouvant ce faisant être déplacée par coulissement le long de la rainure de guidage (50a).

2. Dispositif de serrage destiné à une machine-outil selon la revendication 1, **caractérisé en ce**
**que** la plaque de pression (50) présente, sur une de ses faces d'extrémité (50e) côté frontal, un évidement (50.1) de forme cylindrique, dans lequel sont disposés au moins un ressort de pression (80) et au moins une tige cylindrique (70).

3. Dispositif de serrage destiné à une machine-outil selon la revendication 1, **caractérisé en ce**
**que** le corps de base (10) présente, de manière parallèle par rapport à la surface de serrage (10b), au moins une ouverture (10c) côté frontal de forme cylindrique de l'évidement (10c) en forme de poche.

4. Dispositif de serrage destiné à une machine-outil selon la revendication 3, **caractérisé en ce**
**qu'**est disposé, dans l'ouverture (10c) de forme cylindrique, un bouton-poussoir (30), qui vient en contact côté frontal avec la plaque de pression (50) et dépasse du corps de base (10) sur le côté frontal faisant face.

5. Dispositif de serrage destiné à une machine-outil selon les revendications 1 à 4, **caractérisé en ce**
**qu'**au moins un élément de sécurité ou un élément de fixation (60a) à (60d) est associé à chaque tige de guidage (20a) à (20d).
